# EUROPÄISCHE PATENTSCHRIFT

(11) **EP 1 371 832 B1**
(45) Veröffentlichungstag und Bekanntmachung des Hinweises auf die Patenterteilung: **04.05.2005**
(21) Anmeldenummer: 02027252.2
(22) Anmeldetag: 06.12.2002
(51) Int. Cl.: F02D 9/10, F16K 1/22, B29C 45/14

(54) **Regelklappe mit umgespritzter Welle**
Butterfly valve having overmolded axle
Valve à papillon ayant l'axe surenjecté

(30) Priorität: 14.06.2002 DE 10226594
(43) Veröffentlichungstag der Anmeldung: 17.12.2003
(73) Patentinhaber: ROBERT BOSCH GMBH, 70442 Stuttgart (DE)
(72) Erfinder: Krimmer, Erwin, 73655 Pluederhausen (DE); Baur, Peter, 71334 Waiblingen (DE); Lorenz, Christian, 73434 Aalen-Unterrombach (DE); Hezel, Bruno, 70565 Stuttgart (DE); Hickl, Hubert, 71384 Weinstadt (DE)

(56) Entgegenhaltungen:
- EP-A- 0 482 272
- DE-A- 4 343 091
- FR-A- 2 687 601
- PATENT ABSTRACTS OF JAPAN vol. 2000, no. 11, 3. Januar 2001 (2001-01-03) & JP 2000 210983 A (GE PLASTICS JAPAN LTD;NISSAN MOTOR CO LTD), 2. August 2000 (2000-08-02)
- PATENT ABSTRACTS OF JAPAN vol. 2000, no. 10, 17. November 2000 (2000-11-17) & JP 2000 202866 A (NISSAN MOTOR CO LTD), 25. Juli 2000 (2000-07-25)

## Beschreibung

### Technisches Gebiet

Bei Verbrennungskraftmaschinen kommen im Saugrohrtrakt Drosselklappen zum Einsatz, mit denen das von der Verbrennungskraftmaschine benötigte Luftvolumen zur Verbrennung des Kraftstoffes reguliert werden kann. Die Drosselklappe umfasst in der Regel einen Antrieb, die an einer Welle aufgenommene Drosselklappe sowie ein Drosselgehäuse welches aus Metallguß oder als Kunststoffspritzteil ausgebildet sein kann. Am Drosselgehäuse wird zudem vielfach ein separater Gehäusedeckel vorgesehen, mit welchen das Gehäuse zum Schutz gegen Ansaugen von Fremdluft abgedichtet werden kann.

### Stand der Technik

DE 43 29 522 A1 hat eine Drosseleinrichtung zum Gegenstand, welche im Ansaugkanal einer Brennkraftmaschine eingebaut wird. Die Drosseleinrichtung besteht aus einem Gehäuse, einer Drosselklappenansteuerung, einem Positionsdetektor, einer an einer Drosselklappenwelle befestigten Drosselklappe, wobei die Drosseleinrichtung zwischen dem reinluftseitigem Luftfilteranschluss und der Sauganlage der Brennkraftmaschine angeordnet ist. Der Luftfilteranschluss und/oder die Sauganlage sind aus einem Kunststoff gefertigt, wobei die einzelnen Elemente der Drosseleinrichtung modular aufgebaut sind und über Steck-, Schraub- oder Spannverbindungen miteinander gefügt sind. Die Drosselklappenwelle ist zweiteilig aufgebaut. Auf einer Wellenhälfte der Drosselklappenwelle kann das Modul für den Lagesensor und auf der anderen Wellenhälfte das Modul für die Drosselklappenverstelleinheit angeordnet werden. Stelleinheit, Stellsensor, Drosselklappe und Drosselklappenwelle bilden eine gemeinsame Baueinheit.

WO 95/2493 A1 hat einen aus Kunststoff bestehenden Formkörper zum Gegenstand. Aus dieser Veröffentlichung ist ein aus Kunststoff bestehender, insbesondere im Spritzgießverfahren hergestellter Formkörper bekannt, sowie ein Drosselklappengehäuse mit einer Wandung, die mit einer Innenwandfläche einen Hohlraum begrenzt. In der Wandung ist zumindest an der dem Hohlraum zugewandten Innenwandfläche ein vom Kunststoffmaterial bedecktes Einlegeteil angeordnet. Das Einlegeteil ist derart gegenüber der Normalebene geneigt, dass es zu einer im Hohlraum angeordneten, schwenkbar ausgebildeten Drosselklappe, die zur Leistungssteuerung einer Verbrennungskraftmaschine dient, in deren Leerlaufstellung fluchtend verläuft. Das Einlegeteil kann aus metallischem Werkstoff, beispielsweise einem Blech bestehen.

Aus DE 197 03 296 A1 ist ein Verfahren zum Abdichten einer eine Drosselklappe tragenden Drosselklappenwelle und eines Drosselklappenstutzes bekannt. Bei einem Drosselklappenstutzen für eine Brennkraftmaschine eines Kraftfahrzeuges ist eine Ausnehmung des Drosselklappenstutzes durchdringende Drosselklappenwelle mit einem aushärtenden Dichtmittel abgedichtet. Das Dichtmittel verhindert ein Durchströmen von Luft durch einen fertigungsbedingte Spalt zwischen der Drosselklappenwelle und den Ausnehmungen.

EP 0 575 235 B1 bezieht sich auf ein drehbares Drosselorgan für Kraftstoffeinspritzanlagen an Brennkraftmaschinen. Es ist eine Welle mit zylindrischen Sitzen vorgesehen, die einen Abschnitt zur Aufnahme einer Drosselklappe aufnimmt, wobei der Abschnitt eine gleichbleibenden nicht rotationssymmetrischen Querschnitt hat, der größer als der Querschnitt des auf einer Seite des Abschnittes befindlichen Seite der Welle ist. Die Drosselklappe hat eine zentrale Bohrung, deren Querschnitt demjenigen des Abschnittes entspricht. Die Welle besteht insgesamt aus Kunststoff und ist einstückig mit einem Nocken zum Einhängen oder Aufwickeln eines auf der anderen Seite des besagten Abschnittes gelegenen Steuerseiles gegossen, wobei die Drosselklappe selbst aus Kunststoff besteht. Bei dem Kunststoff handelt es sich bevorzugt um einen thermoplastischen Kunststoff. Der Abschnitt der Drosselklappenwelle hat eine zylindrische Form mit parallelen Abflachungen. Die Drosselklappe ihrerseits weist eine abgeflachte Narbe mit zentraler Bohrung auf, die im Querschnitt die Form eines parallel zu den Flügeln der Drosselklappe abgeflachten Kreises hat.

DE 199 15 695 A1 bezieht sich auf ein Einlasselement aus Kunststoff und ein Verfahren zur dessen Herstellung. Ein Drosselkörper enthält einen inneren Hauptabschnitt aus Kunststoff, ferner einen Nebenabschnitt aus Kunststoff, der integral mit einem Aussenumfang des Hauptabschnittes gebildet ist und ein Vereisungsverhinderungsrohr, welches in dem Nebenabschnitt eingebettet ist. Der zylindrisch ausgebildete Hauptabschnitt mit im wesentlichen gleichmäßiger Wanddicke wird in einem ersten Formschritt gebildet, wodurch Schrumpf- und Verwerfungserscheinungen unterdrückt werden, um die erforderliche Rundheit oder Kreisförmigkeit einer Innenumfangsfläche des Hauptabschnitts zu erhalten. Der Nebenabschnitt wird in einem anschließenden zweiten Formschritt gebildet, so dass eine Aussenseite des Hauptabschnitts abgedeckt wird, um hierdurch einen Drosselkörper herzustellen. Die Temperatur eines Abschnittes des Formwerkzeuges, der zu der Innenumfangsfläche des Hauptabschnittes weist, ist niedriger eingestellt verglichen mit der Temperatur des anderen Abschnittes des Formwerkzeuges. Dadurch wird die Innenumfangsfläche des Hauptabschnittes, bei der es auf Dimensionsgenauigkeit ankommt, früher gekühlt als der andere Abschnitt, um Schrumpfungserscheinungen wirkungsvoll zu verhindern. Werden zum Formen des Hauptabschnittes und des Nebenabschnittes unterschiedliche Typen von Kunststoffmaterialien eingesetzt, wird der Freiheitsgrad bei der Materialwahl erhöht.

FR 2 687 601 erläutert das Produktionsverfahren einer Eingespritzten Drosselklappe.

### Darstellung der Erfindung

Mit der erfindungsgemäß vorgeschlagenen Lösung wird in vorteilhafter Weise eine Drosselklappe bereitgestellt, die ohne eine aufwendige Einzelteilbearbeitung in ein Drosselklappengehäuse aus Kunststoff oder Aluminium eingespritzt wird. Das Klappenteil kann als ein im wesentlichen ebenes, mit einer gelochten Umrandung ausgebildetes Stanzteil ausgebildet werden, welches nach dem Einspritzen mittels Laserschnitt für die Klappenfunktion, d.h. das Verschwenken freigeschnitten wird. Die gelochte Umrandung des Klappenteiles umfasst einzelne Bohrungen oder Öffnungen, welche beim Einspritzvorgang von noch fließfähigen Kunststoff durchdrungen werden, so dass die Verankerung des als Klappenteil bildenden Stanzteiles im Kunststoffgehäuses gesichert wird. Vorteilhafterweise kann das Stanzteil eine Prägezone enthalten, welche eine Schwachstelle darstellt, entlang der durch einen Laserschnitt beispielsweise im Gehäuse die gelochte Umrandung von dem später schwenkbar ausgebildeten Klappenteil getrennt werden kann.

In das Stanzteil wird eine Welle mit Querbohrungen eingelegt, welche durch einzelne bügelförmige Abschnitte der Stanzteilfläche an ihrer Umfangsseite umschlossen wird. Diese in das Stanzteil eingelegte Welle aus metallischem Material, welche gehärtet werden kann, wird beim Umspritzen des Stanzteiles vom Kunststoffmaterial umgeben, welches in fließfähigem Zustand in an der Welle aus gehärtetem metallischem Material vorgesehene Öffnungen, welche beispielsweise als Querbohrungen ausgestaltet sein können, durchdringt, wodurch eine Schlitzung der Welle zum späteren Montieren eines Klappenelementes entfallen kann. Aufgrund des Umspritzungsvorganges des Stanzteiles mit in bügelförmigen Bereichen vormontierter Welle, entfällt eine aufwendige Einzelteilbearbeitung, da eine Fixierung zwischen dem Stanzteil und der Welle durch das Umspritzen des Stanzteiles mit Kunststoffmaterial erfolgt. Während des Umspritzens des Stanzteiles mit vormontierter Welle durchdringt der fließfähige Kunststoff Querbohrungen in der Welle aus gehärtetem metallischem Material, so dass eine kraft- und formschlüssige Verbindung zwischen den metallischen Komponenten, d.h. Welle aus gehärtetem Material und Stanzteil und dem diese umgebenden Kunststoffmaterial erzeugt wird.

### Zeichnung

Anhand der Zeichnung wird die Erfindung nachstehend eingehender beschrieben.

Es zeigt:
- Figur 1: eine in ein Einspritz-Stanzteil vormontierte Klappenwelle mit Querbohrungen,
- Figur 2: das in ein Gehäuse eingespritzte Einspritz-Stanzteil mit umspritzer Klappenwelle und Verrippung der Klappenfläche,
- Figur 3: das im Material des Gehäuses aufgenommene Einspritz-Stanzteil gemäß Figur 2 in Schnittdarstellung, wobei der Schnitt in der Ebene der Verrippung verläuft,
- Figur 4: das im Gehäusematerial aufgenommene Einspritz-Stanzteil gemäß Figur 2 mit Längsschnitt durch die von Kunststoffmaterial umspritzte Klappenwelle und
- Figur 5: eine perspektivische Draufsicht auf das das Einspritz-Stanzteil umschlies-sende Gehäuse.

### Ausführungsvarianten

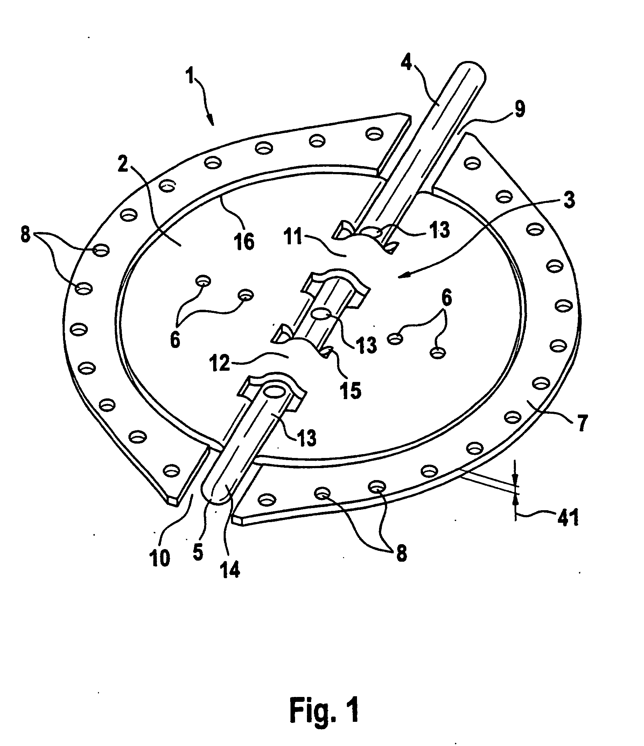

Figur 1 zeigt ein vormontiertes Einspritz-Stanzteil mit gelochter Umrandung, mit bügelförmig verlaufenden Ausstanzungen, die eine Klappenwelle fixieren.

Ein aus einem dünnen metallischen Material gefertigtes Einspritz-Stanzteil 1 umfasst eine Klappenfläche 2, die am Umfang von einer Einspritzumrandung 7 umgeben ist. Die Einspritzumrandung 7 enthält eine Vielzahl von Öffnungen 8, die beispielsweise als Bohrungen oder als Ausstanzungen ausgebildet sein können.

In der Klappenfläche 2 ist eine Einlegewelle 7 fixiert. Dazu sind in der Klappenfläche 2 zwei in die Zeichenebene gemäß Figur 1 erhaben vorstehende kegelförmige Abschnitte 11 bzw. 12 ausgebildet sowie ein zwischen der ersten bügelartigen Ausformung 11 und der hineinragende zweiten bügelartigen Ausformung 12 vorgesehene weitere nach unten in die Zeichenebene, dritte bügelartige Ausformung. Die Bügel 11, 12 bzw. 15 umschliessen die Umfangsfläche 14 der Klappenwelle 4 so dass diese mit einem gerundeten Ende 5 in einer zweiten Ausnehmung 10 ein Einspritzumrandung 7 positioniert ist. Das dem gerundeten Ende 5 der Klappenwelle 4 gegenüberliegende Ende der Klappenwelle 4 durchsetzt eine erste Ausnehmung 9 der als Fixierung des Einlege-Stanzteil dienenden Einspritzumrandung 7. An dem dem gerundeten Ende 5 der Klappenwelle 4 gegenüberliegenden Ende ist ein in Figur 1 nicht dargestellter Stellantrieb beispielsweise ausgebildet als Elektromotor, aufgenommen, mit welchem die Klappenwelle 4 und die daran fixierte Klappenfläche 2 verschwenkt werden kann.

Innerhalb eines Befestigungsbereiches 3, innerhalb dessen die Bügel 11, 12 und 15 aneinander beabstandet, jedoch nebeneinander ausgebildet sind, enthält die Klappenwelle 4 Queröffnungen 13, die beispielsweise als Querbohrungen ausgebildet werden können. Die Queröffnungen 13 der Klappenwelle 4 sind durchgängig beschaffen, so dass ein Kunststoffmaterial, mit welchem der Befestigungsbereich 3 zwischen der Klappenwelle 4 und der Klappenfläche 2 umspritzt wird, durch die Queröffnungen 13 fließen kann und eine dauerhafte, form- und kraftschlüssige Verbindung zwischen der Klappenwelle 4 der Klappenfläche 2 nach Umspritzen mit Kunststoffmaterial erzielt wird.

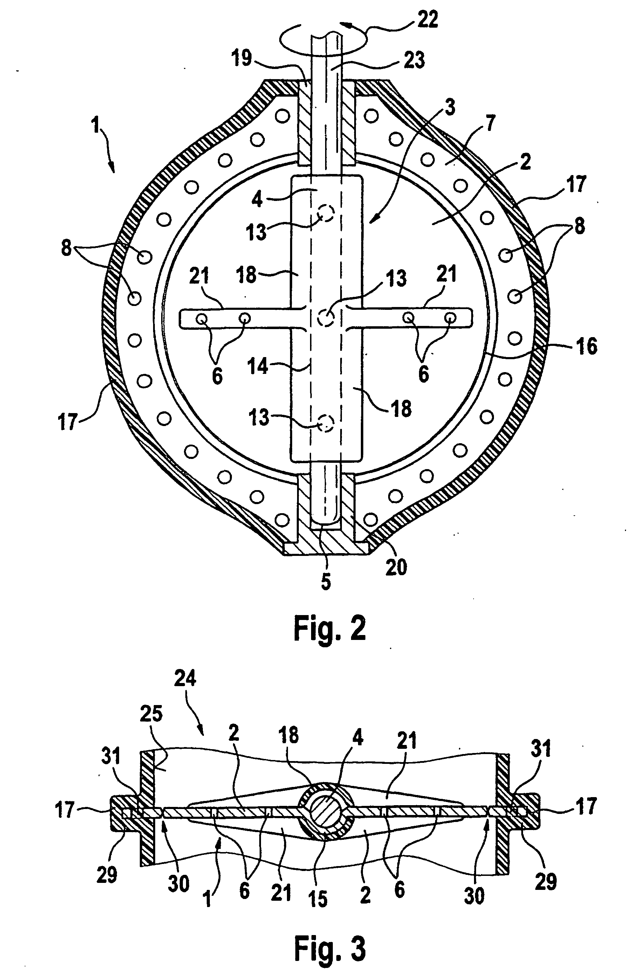

Darüber hinaus sind senkrecht zur Klappenwelle 4 in der Klappenfläche 2 des Einspritz-Stanzteiles 1 Öffnungen 6 vorgesehen, die sich durch die Klappenfläche 2 erstrecken und ebenfalls beim Spritzen des Einspritz-Stanzteiles 1 im Befestigungsbereich 3 von Kunststoff durchsetzt sind und die der Fixierung einer versteifenden Verrippung auf Ober- und Unterseite des Flächenbereiches 2 dienen (vergleiche Darstellung gemäß Figur 3).

Das Einspritz-Stanzteil 1 gemäß der Darstellung in Figur 1 ist in einer Materialstärke 41 von wenigen mm, z. B. zwischen 1 und 2 mm ausgebildet. Das Einspritz-Stanzteil 1 gemäß Figur 1 kann zwischen dem Flächenbereich 2 und der dieser umgebenden Einspritzumrandung 7 eine ringförmig verlaufende Schwächungszone 16 enthalten. Diese beispielsweise als Einprägung ausgebildete, kreisförmig verlaufende Schwächungszone 16 dient dem Ausschneiden des Flächenbreiches 2 beispielsweise mittels eines Laserschnittes zum Erreichen des Verschwenkens des Flächenbereiches 2, nach dem die Einspritzumrandung 7 in ein Kunststoff- oder Aluminiumgehäuse eingelassen ist. Die Schwächungszone 16, die beispielsweise als Einprägzone ausgebildet sein kann, kann sich sowohl auf der Ober- als auch auf der Unterseite des Einspritz-Stanzteil befinden; ferner kann die Schwächungszone 16 auf Ober- und Unterseite des Einspritz-Stanzteiles 1 verlaufen, so dass durch eine Laserschnittbearbeitung lediglich das Trennen einer minimalen Materialstärke vorzunehmen ist, dass die erreichbare Präzision der Fertigung erheblich begünstigt.

Figur 2 ist das in ein Gehäuse eingespritzte Einspritz-Stanzteil umspritzter Klappenwelle und Verrippung der Klappe zu entnehmen.

Aus der Draufsicht gemäß Figur 2 geht hervor, dass die am Einspritz-Stanzteil 1 vormontierte Klappenwelle 4 im Bereich ihres gerundeten Endes 5 als auch im Bereich ihres einem Anschluß 23 für einen hier nicht dargestellten Stellantrieb gegenüberliegenden Ende mit einer ersten Lagerbuchse 19 bzw. einer zweiten Lagerbuchse 20 versehen ist. Die Lagerbuchsen 19 bzw. 20 sind passgenau in die in Figur 1 dargestellten Ausnehmungen 9 bzw. 10 der Einspritzumrandung 10 eingelassen und werden vorzugsweise auf die Einlegewelle 4 aufgepresst.

Das in Figur 2 dargestellte Einspritz-Stanzteil 1 ist im Bereich seiner Einspritzumrandung 7, welche mit einer Anzahl von Öffnungen 8 versehen ist, vom Gehäusematerial 17 umspritzt. Beim Einspritzen des Gehäusematerials 17 in eine Kunststoffspritzgußform und in dieser positioniertem Einspritz-Stanzteil 1 durchdringt der fließfähige Kunststoff die einzelnen Öffnungen 8, die beispielsweise als Löcher, als Schlitze oder auch in einer anderen Geometrie ausgebildet sein können und fixiert dadurch das Einspritz-Stanzteil 1 im Gehäusematerial 17. Gleichzeitig mit dem Einspritzen des Einspritz-Stanzteil in das Gehäusematerial erfolgt ein Umspritzen des Befestigungsbereiches 3, in welchem die Klappenwelle 4 mit dem Einspritz-Stanzteil 1 gefügt ist. In diesem Bereich erfolgt ein Einspritzen von Kunststoffmaterial 18 in die in Figur 2 nicht dargestellte Spritzgießform derart, dass die an der Klappenwelle 4 ausgebildeten Querbohrungen 13, die die Klappenwelle 4 durchgängig durchziehen, von Kunststoffmaterial durchdrungen werden, so dass sich innerhalb des Befestigungsbereiches 3 eine formschlüssige Verbindung von Kunststoffmaterial 18 und Klappenwelle 4 ergibt. Gleichzeitig mit dem Umspritzen der Klappenwelle 4 durch das Kunststoffmaterial 18 erfolgt ein Ausformung von Verstärkungsrippen 21, welche an einer oder in der Oberseite und an der Unterseite des später auszuschneidenden Flächenbereiches 2 des Einspritz-Stanzteiles 1 ausgebildet werden. Das Kunststoffmaterial, welches die Verrippungen 21 am Flächenbereich 2 des Einspritz-Stanzteil 1 bildet, durchsetzt den Flächenbereich 2, d.h. später an der entlang der Schwächungszone 16 ausgeschnittene Klappenfläche der Drosselklappeneinheit, so dass eine Versteifung des Flächenbereiches 2, d.h. der Klappenfläche der Drosselklappeneinheit in radiale Richtung erzielt wird. Die Verstärkungsrippen 21 können, wie in Figur 3 dargestellt, gleichzeitig an Ober- und Unterseite des Flächenbereiches 2, d.h. der Klappenfläche des Einspritz-Stanzteiles 1 angeformt werden.

Durch das Eindringen des Kunststoffmateriales 18 in die beispielsweise als Querbohrung gestalteten Öffnungen 13 der Klappenwelle 4 erfolgt eine form- und kraftschlüssige Verbindung, so dass nach Herausschneiden des als Klappenfläche dienenden Flächenbereiches 2 des Einspritz-Stanzteiles 1 gemäß des Laserschneidverfahrens und einer Drehung der Klappenwelle 4 ein Verschwenken des als Klappenfläche dienenden Flächenbereiches 2 möglich ist, wobei die durch bügelartige Ausstanzungen 11, 12, 15 (vergleiche Darstellung gemäß Figur 1) am Einspritz-Stanzteil 1 gehaltene Klappenwelle 4 in einer ersten Lagerbuchse 19 und einer zweiten Lagerbuchse 20 innerhalb des aus Gehäusematerials 17 bestehenden Gehäuses verschwenkbar aufgenommen ist. Das Einpressen der ersten Lagerbuchse 19 bzw. der zweiten Lagerbuchse 20 auf die Klappenwelle 4 erfolgt, sobald das Einspritz-Stanzteil 1 vom Gehäusematerial 17 umspritzt ist und der Befestigungsbereich 3 von Klappenwelle 4 mit dem Einlege-Stanzteil 1 ebenfalls von Kunststoffmaterial 18 umspritzt ist. Danach werden die erste Lagerbuchse 19 bzw. die zweite Lagerbuchse 20 auf das gerundete Ende 5 der Klappenwelle 4 bzw. das an einen in Figur 2 nicht dargestellten Stellantrieb 23 anschließbare Klappenwellenende aufgepresst. Die Drehrichtung, mit welcher ein an der Anschlußstelle 23 der Klappenwelle 4 geschlossener Stellantrieb auf die Klappenwelle 4 wirkt ist durch den mit Bezugszeichen 22 identifizierten Pfeil angedeutet.

Figur 3 zeigt das im Gehäusematerial aufgenommene Einspritz-Stanzteil gemäß Figur 2 in Schnittdarstellung, wobei der Schnitt in der Ebene der Verrippung verläuft. Dass das Einspritz-Stanzteil 1 aufnehmende Gehäusematerial 17 kann beispielsweise das eines Strömungskanales 24 sein, der von einem Gasstrom wie z.B. einem Kraftstoff-Luftgemisch oder einem Luftstrom im Ansaugtrakt einer Verbrennungskraftmaschine durchströmt wird. Der Strömungsquerschnitt wird durch eine Kanalinnenwand 25 des Strömungskanales 24 begrenzt. Aus der Schnittdarstellung gemäß Figur 3 geht hervor, dass das die dem Flächenbereich 2 enthaltende Einspritz-Stanzteil 1 entlang seiner Einspritzumrandung 7 beidseitig von Kunststoffmaterial 17 umschlossen ist, wobei die Öffnungen 8 in der Einspritzumrandung 7 von Stegen 31 von Gehäusematerial 17 durchsetzt sind, wodurch das Einspritz-Stanzteil 1 im in Figur 3 dargestellten Strömungskanal 24 fixiert ist. Mit Bezugszeichen 30 ist die an einer oder an beiden Seiten des Einspritz-Stanzteil 1 ausgebildete Zone bezeichnet, an der der Flächenbereich 2 innerhalb des Strömungskanales 24 beispielsweise durch Laserschneiden aus dem Einspritz-Stanzteil 1 ausgeschnitten wird. Der durch das Ausschneiden aus dem Einspritz-Stanzteil 1 herausgeschnittene Flächenbereich 2 dient als schwenkbare Drosselklappe, mit welcher ein den Strömungskanal 24 passierender Gasstrom reguliert werden kann. Aus der Schnittdarstellung gemäß Figur 3 geht hervor, dass sich an Ober- und Unterseite des Flächenbereiches 2 des Einspritz-Stanzteiles 1 eine Verrippung 21 befindet. Die Verrippung 21 wird gleichzeitig mit der Umspritzung der Klappenwelle 4 ausgebildet, wobei das Kunststoffmaterial 18 die im Flächenbereich 2 senkrecht zum Verlauf der Klappenwelle 4 angeordneten Öffnungen 6 durchsetzt, so dass eine formschlüssige Verbindung zwischen dem Flächenbereich 2 des Einspritz-Stanzteiles 1 und dem Kunststoffmaterial 18 erzielt wird. Aus der Darstellung gemäß Figur 3 geht darüber hinaus hervor, dass eine bügelartig konfigurierte Ausstanzung 15 im Einspritz-Stanzteil 1 vollständig vom Kunststoffmaterial 18 umspritzt ist, welches zu dem die in Figur 3 nicht dargestellten durchgängigen Öffnungen 13 der Klappenwelle 4 durchsetzt.

Durch die in das Gehäusematerial 17 eingespritzte Einspritzumrandung 7 des Einspritz-Stanzteiles 1 erfolgt eine fertigungstechnisch einfach erzeugbare und positionsgenaue Einfassung 29 des Einspritz-Stanzteiles 1 in einem Gehäuse.

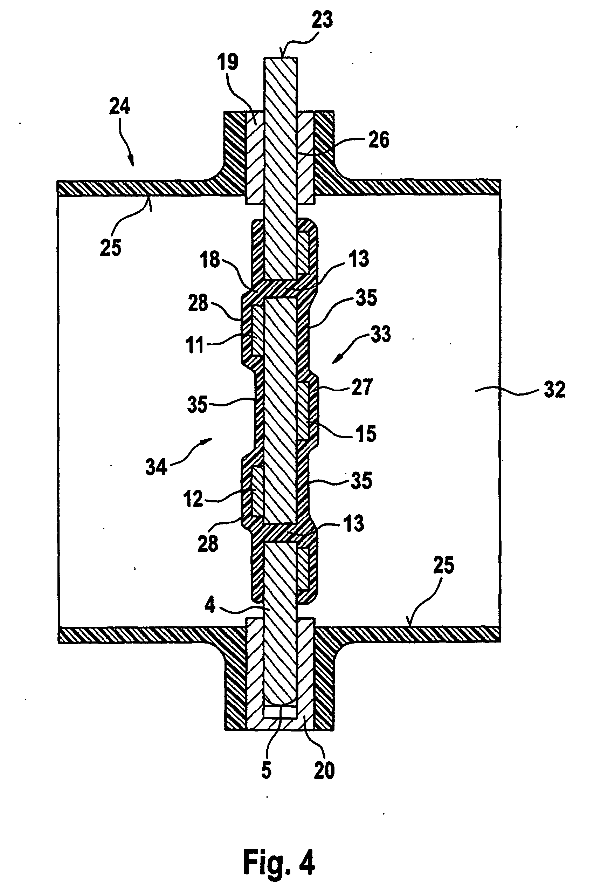

Figur 4 zeigt das im Gehäusematerial aufgenommene Einspritz-Stanzteil 1 gemäß Figur 2 im Längsschnitt durch die von Kunststoffmaterial umspritzte Klappenwelle.

Aus der Darstellung gemäß Figur 4 lässt sich entnehmen, dass die Klappenwelle 4 des Einspritz-Stanzteiles 1 in einer ersten Lagerbuchse 19 und einer zweiten Lagerbuchse 20 in der Wandung eines Strömungskanales 24 gelagert ist. Die erste Lagerbuchse 19 sowie die zweite Lagerbuchse 20 können Spaltdichtungen 26 enthalten. Mit Bezugszeichen 23 ist das Ende der Klappenwelle 4 bezeichnet, über welche eine Schwenkbewegung in diese eingeleitet wird, wozu ein in Figur 4 nicht dargestellter Stellenantrieb so z.B. ein Elektromotor eingesetzt werden kann.

Durch Umspritzen der am Einspritz-Stanzteil 1 von bügelartigen Ausstanzungen 11, 12 und 15 an ihrer Umfangsfläche 14 teilweise umschlossenen Klappenwelle 4, mit Kunststoffmaterial 18 entstehen im Bereich der durchgängigen Öffnungen 13 der Klappenwelle 4 Kunststoffmaterialstege, welche die Klappenwelle 4 und den ausgeschnittenen Flächenbereich 2 des Einspritz-Stanzteiles 1 zuverlässig miteinander fixieren. Aus der Schnittdarstellung gemäß Figur 4 geht hervor, dass die obere der Öffnugnen 13 neben der ersten bügelartigen Ausstanzung 11 des Einspritz-Stanzteiles liegt, während die weiter unten liegende Öffnung 13 der Klappenwelle 4 neben der zweiten bügelartigen Ausstanzung 12 liegt. Da die beiden bügelartigen Ausstanzungen 11 bzw. 12 voneinander beabstandet orientiert sind, bildet sich beim Umspritzen dieser bügelartigen Ausstanzungen 11 bzw. 12 mit Kunststoffmaterial 18 eine mit Bezugszeichen 28 bezeichnete Ausbauchung im Bereich der Umspritzung der Klappenwell 4 aus. Die erste bügelartige Ausstanzung 11 sowie die zweite bügelartige Ausstanzung 12 befinden sich auf der zweiten Seite des Einspritz-Stanzteiles 1, während eine zwischen diesen liegende weitere, dritte bügelartige Ausstanzung 15 auf der gegenüberliegenden Seite, d.h. der ersten Seite 33 des Einspritz-Stanzteiles 1 ausgebildet ist. Anstelle der hier dargestellten drei bügelartigen Ausstanzungen können auch vier oder fünf bügelartige Ausstanzungen ausgebildet werden, jeweils abhängig vom Strömungsquerschnitt 32 des Strömungskanales 24, in dem das Einlege-Stanzteil 1 fixiert wird.

Beim Umspritzen der mittleren, dritten, bügelartigen Ausstanzung 15 im Einspirtz-Einlegeteil 1 stellt sich eine Ausbauchung 27 aus Kunststoffmaterial 18 auf der ersten Seite 33 des Einspritz-Stanzteiles 1 ein. Gegengleich zu den Ausbauchungen 27 bzw. 28 auf der ersten Seite 33 oder der zweiten Seite 34 des Einspritz-Stanzteiles 1, liegen an den Rückseiten jeweils Abflachungen 35, da die Klappenwelle im Bereich der Abflachungen 35 nicht von einer bügelartig konfigurierten Ausstanzung 11, 12 bzw. 15 umschlossen ist. Die in axialer Richtung der Klappenwelle 4 angeordneten bügelartigen Ausstanzungen 11, 12 und 15, von denen in der Darstellung gemäß Figur 4 drei exemplarisch herausgehoben sind, liegen in einem Abstand voneinander, so dass sich beim Umspritzen des Befestigungsbereiches 3 zwischen Klappenwelle 4 und Einspritz-Stanzteil 1 ein Verfließen von Kunststoff durch die Freiräume zwischen den bügelartigen Ausstanzungen 11, 12 und 15 einstellt, welches die formschlüssge Verbindung zwischen der Klappenwelle 4 und der diese umgebenden Ausstanzungen 11, 12, 15 des Einlege-Stanzteiles 1 in vorteilhafter Weise begünstigt.

Nach dem Umspritzen des Befestigungsbereiches 3 zwischen der Klappenwelle 4 und dem in das Gehäusematerial 17 eingespritzten Einspritz-Stanzteiles 1 erfolgt ein Ausschneiden des die Drosselklappe repräsentierenden Flächenbereiches 2 mittels eines Schneidverfahrens. Besonders gute Ergebnisse werden bei Anwendung des Laser-Schneidens erreicht, bei dem eine auf einer der Seiten 33 bzw. 34 oder auf beiden Seiten 33, 34 des Einspritz-Stanzteiles 1 ausgebildete Schwächungszone 16 von einem Laserschneidkopf abgefahren wird. Dabei trennt dieser den an der Klappenwelle 4 fixierten Flächenbereich 2 des Einlege-Stanzteiles 1 von der im Gehäusematerial 17 aufgenommenen Einspritzumrandung 7. Durch die Anwendung des Laserschneidverfahrens kann ein hochgenauer, im wesentlichen gratfreier Schnitt vorgenommen werden, so dass sich bei geschlossener Stellung des verschwenkbaren, an der Klappenfläche 4 aufgenommenen Flächenbereiches 2 eine hohe Dichtwirkung im Strömungskanal 24 erreichen lässt.

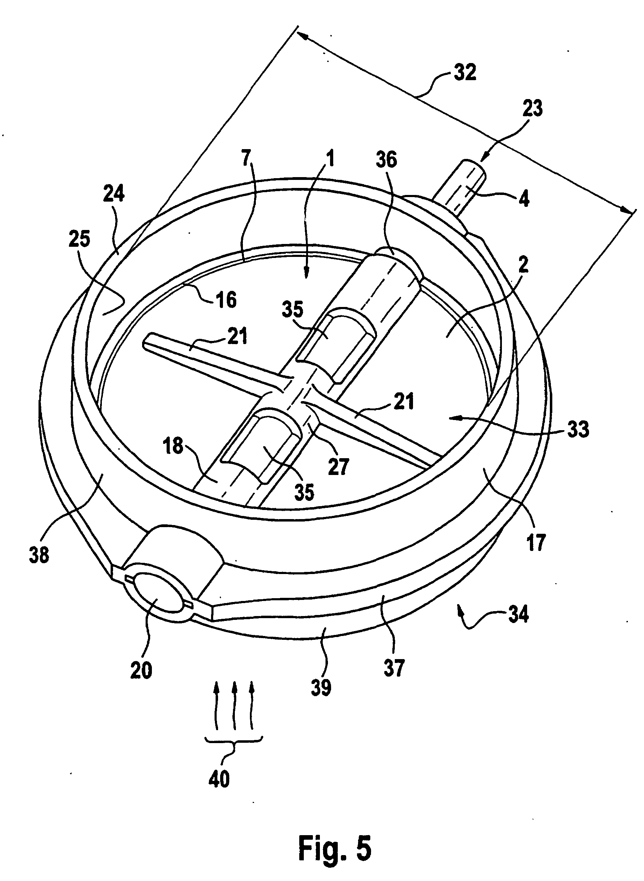

In der Darstellung gemäß Figur 5 ist eine perspektivische Draufsicht auf das das Einspritz-Stanzteil umschließende Gehäuse zu entnehmen.

Das aus einem metallischem Werkstoff gefertigte Einspritz-Stanzteil 1 ist gemäß der Darstellung in Figur 5 entlang seiner Einspritz-Umrandung 7 von Gehäusematerial 17, Kunststoff oder Aluminium umschlossen. Gemäß der in Figur 5 dargestellten Ausführungsvariante einer Drosselklappen oder Regelklappeneinheit sind eine erste Anschlußstelle 38 sowie eine weitere Anschlußstelle 39 ausgebildet, an welchen Kanäle für ein gasförmiges Medium mit der erfindungsgemäß hergestellten Drosselklappeneinheit verbunden werden können. Der den Strömungsquerschnitt 32 passierende Gasstrom ist durch die mit Bezugszeichen 40 bezeichneten Pfeile angedeutet.

Nach Ausbilden des Gehäuses, d.h. Umspritzen des Einspritz-Stanzteiles 1 mit Gehäusematerial 17 erfolgt ein Umspritzen des Befestigungsbereiches 3 zwischen Klappenwelle 4 und dem Flächenbereich 2 des Einspritz-Stanzteiles 1. Das Kunststoffmaterial 18 umschließt die Klappenwelle 4 vollständig, wobei sich die in Figur 4 im Schnitt dargestellten Abflachungen 35 bzw. die Ausbauchung 27 auf der ersten Seite 33 des Flächenbereiches 2 einstellt. Senkrecht zur Klappenwelle 4 sind auf der ersten Seite 33 des Flächenbereiches 2 die Verstärkungsrippen 21 zu erkennen, die die durch das Kunststoffmaterial 18 durchdrungenen Öffnungen 6 in Flächenbereich 2 verdecken.

Die zweite Lagerbuchse 20 ist mittels einer Verdrehsicherung gehäusefest in das Gehäusematerial 17 eingepresst, während am gegenüberliegenden Ende der Klappenwelle (vergleiche Bezugszeichen 23) ein dem Flächenbereich 2 verschwenkender Stellantrieb angeschlossen wird.

Das in Figur 5 in perspektivierscher Draufsicht dargestellte Einspritz-Stanzteil 1 umfasst eine kreisförmig verlaufende an der ersten Seite 33 eingeprägte Schwächungszone 16. Diese kann auch an der hier nicht dargestellten zweiten Seite 34 des Einspritz-Stanzteiles 1 ausgebildet sein oder sich auf beiden Seiten 33, 34 des Einspritz-Stanzteiles 1 befinden. Die Schwächungszone 16 trennt den auszuschneidenden Flächenbereich 2 von der im Gehäusematerial 17 befestigten Einspritzumrandung 7. Entlang der hier kreisförmig konfigurierten Schwächungszone 16 erfolgt ein Ausschneiden, d.h. eine Trennung des Material des Flächenbereiches 2 von dem Material der Einspritzumrandung 7. Dadurch wird die Klappenfunktion des Flächenbereiches 2 hergestellt, so das bei einer Schwenkbewegung der Klappenwelle 4 mittels des an der Anschlußstelle 23 anschließbaren Stellantriebes, ein teilweises Verschließen oder Freigeben des Strömungsquerschnittes 32 des Strömungskanales 24 erfolgen kann.

Zur Versteifung des Gehäuses aus Gehäusematerial 17 kann dieses entlang seiner Umfangsfläche ein zwischen der ersten Anschlußstelle 38 und der zweiten Anschlußstelle 39 verlaufende Außenfärbung 37 enthalten, in welche die Verdrehsicherung der zweiten Lagerbuche 20 eingepresst werden kann.

Mit dem erfindungsgemäß vorgeschlagenen Herstellungsverfahren einer Drosselklappeneinheit kann eine aufwendige Einzelteilbearbeitung Regel- oder Drosselklappen, wie sie beispielsweise im Ansaugtrakt oder Ladelufttrakt von Verbrennungskraftmaschinen eingesetzt werden, umgangen werden. Als separat genau bearbeitete Aluminiumgehäuse bzw. Klappenteile sowie das Vorhalten einer mit einer Schlitzung versehenen Klappenwelle können mit dem erfindungsgemäß vorgeschlagenen Herstellungsverfahren umgangen werden. Aus Kunststoffmaterial oder aus Aluminiumdruckguß gefertigte Gehäuse werden heute in Großserie gefertigt, wozu vorzugsweise das Aluminiumspritzgießen bzw. das Kunststoffspritzgießverfahren, bei denen jeweils eine Spritzgießform eingesetzt wird, herangezogen werden. Das Ausschneiden des an der Klappenwelle 4 befestigten Flächenbereiches 3 erfolgt vorzugsweise über das Laser-Schneidverfahren, wodurch eine hohe Präzision des Schnittverlaufes gegeben ist. Durch das Vorsehen von durchgängigen Öffnungen 13 in der Klappenwelle 4 sowie dem Vorsehen von Öffnungen 6 im Flächenbereich 2 kann eine formschlüssige Verbindung zwischen dem schwenkbaren Flächenbereich 2 und dem Kunststoffmaterial 18 in einem Arbeitsgang hergestellt werden. Das Ausbilden von einander beabstandeter wechselweise orientierter bügelförmiger Ausstanzungen 11, 12 bzw. 15 im Flächenbereich 2 des Einspritz-Stanzteiles 1 gestattet eine einfache Vormontage der Klappenwelle 4 in das Einspritz-Stanzteil 1, wobei die zwischen den bügelartigen Ausstanzungen 11, 12 und 15 liegenden Freiräume zusätzlich zu den Öffnungen 13 in der Klappenwelle 4 bzw. den Öffnungen 6 im Flächenbereich 2 von Kunststoffmaterial 18 durchströmt werden. Unter Vermeidung des Einsatzes einer geschlitzten und separat zu bearbeitenden Klappenwelle 4 kann eine formschlüssige, eine Kraftübertragung gewährleistende, Verbindung zwischen diesen Komponenten erreicht werden.

### Bezugszeichenliste

- 1: Einspritz-Stanzteil
- 2: Flächenbereich
- 3: Befestigungsbereich Klappenwelle
- 4: Klappenwelle
- 5: gerundetes Ende
- 6: Öffnungen im Flächenbereich
- 7: Einspritzumrandung
- 8: Befestigungsöffnung
- 9: erste Ausnehmung
- 10: zweite Ausnehmung
- 11: erste bügelartige Ausstanzung
- 12: zweite bügelartige Ausstanzung
- 13: Queröffnung Welle
- 14: Umfangsfläche Welle
- 15: weitere, dritte bügelartige Ausstanzung
- 16: Schwächungszone
- 17: Gehäusematerial
- 18: Umspritzung Welle/Klappe
- 19: erste Lagerbuchse
- 20: zweite Lagerbuchse
- 21: Radialverrippung
- 22: Drehsinn Klappenwelle
- 23: Anschlußstellantrieb
- 24: Strömungskanal
- 25: Kanalinnenwand
- 26: Spaltdichtung
- 27: Ausbauchung erste Seite
- 28: Ausbauchung zweite Seite
- 29: Lochblecheinfassung Gehäuse
- 30: Laserschnittstelle
- 31: Gehäusematerial (Materialsteg)
- 32: Strömungsquerschnitt
- 33: 1. Seite Flächenbereich
- 34: 2. Seite Flächenbereich
- 35: Abflachung
- 36: Absatz Umspritzung Klappenwelle
- 37: Außenverrippung Gehäusematerial 17
- 38: erste Anschlußstelle
- 39: zweite Anschlußstelle
- 40: Strömungsrichtung Gasstrom
- 41: Materialstärke

## Patentansprüche

1. Verfahren zur Herstellung einer Drosselklappeneinheit zur Aufnahme in einem von einer Gasstrom (40) durchströmten Strömungskanal (24) mit nachfolgenden Verfahrensschritten:
a) eine Klappenwelle (4) wird innerhalb eines Befestigungsbereiches (3) an einem Einspritz-Stanzteil (1) fixiert,
b) das einer Einspritzumrandung (7) enthaltende Einspritz-Stanzteil (1) wird in ein Gehäuse (17) eingespritzt,
c) mit dem Einspritzen des Einspritz-Stanzteiles (1) erfolgt ein Umspritzen des am Einspritz-Stanzteil (1) fixierten Klappenwelle (4) innerhalb des Befestigungsbereiches (3) und
d) eine mit der Klappenwelle (4) verbundener Flächenbereich (2) des Einspritz-Stanzteiles (1) wird aus diesem ausgeschnitten.

2. Verfahren gemäß Anspruch 1, **dadurch gekennzeichnet, dass** der Flächenbereich (2) aus dem Einspritz-Stanzteil (1) durch Laserschneiden ausgeschnitten wird.

3. Verfahren gemäß Anspruch 1, **dadurch gekennzeichnet, dass** das Ausschneiden des Flächenbereiches (2) entlang einer Schwächungszone (16) des Einspritz-Stanzteiles (1) erfolgt.

4. Verfahren gemäß Anspruch 1, **dadurch gekennzeichnet, dass** beim Einspritzen des Einspritz-Stanzteiles (1) in ein Gehäusematerial (17) Öffnungen (8) in der Einspritzumrandung (7) des Einspritz-Stanzteiles (1) vom Gehäusematerial (17, 31) durchdrungen werden.

5. Verfahren gemäß Anspruch 1, **dadurch gekennzeichnet, dass** beim Umspritzen des Befestigungsbereiches (3) mit Kunststoffmaterial Öffnungen (6, 13) im Flächenbereich (2) des Einspritz-Stanzteiles (1) und der Klappenwelle (4) durchdringt.

6. Verfahren gemäß Anspruch 5, **dadurch gekennzeichnet, dass** nach dem Umspritzen des Befestigungsbereiches (3) mit Kunststoffmaterial (18) ein Aufpressen von Lagerbuchsen (19 bzw. 20) auf die Klappenwelle (4) erfolgt.

7. Verfahren gemäß Anspruch 6, **dadurch gekennzeichnet, dass** die Lagerbuchsen (19, 20) im Bereich von Ausnehmungen (9, 10) der beanspruchten Umrandung (9) eingepresst werden.

8. Verfahren gemäß Anspruch 5, **dadurch gekennzeichnet, dass** beim Umspritzen des Befestigungsbereiches (3) mit Kunststoffmaterial (18) bügelartige Ausstanzungen (11, 12, 15) im Flächenbereich (2) des Einspritz-Stanzteiles (1) umschlossen werden.

9. Verfahren gemäß der Ansprüche 4 und 5, **dadurch gekennzeichnet, dass** beim Umspritzen des Befestigungsbereich (2) mit Kunststoffmaterial (18) Öffnungen (6) im Flächenbereich (2) des Einspritz-Stanzteiles (1) durchsetzende Verrippungen (21) ausgebildet werden.

10. Verfahren gemäß Anspruch 8, **dadurch gekennzeichnet, dass** beim Einspritz-Stanzteil (1) bügelartige Ausstanzungen (11, 12, 15) in voneinander beabstandeter, alternierender Abfolge an Ober- und Unterseite (33, 34) des Flächenbereiches (2) angeformt werden.

11. Verfahren gemäß Anspruch 8, **dadurch gekennzeichnet, dass** zwischen den bügelartigen Ausstanzungen (11, 12, 15) des Einspritz-Stanzteiles (1) ein Verfließen des Kunststoffmaterials (18) ermöglichende Freiräume im Befestigungsbereich (3) vorgesehen sind.

12. Drosselklappeneinheit hergestellt gemäß des Verfahrens nach Anspruch 1, **dadurch gekennzeichnet, dass** das Einspritz-Stanzteil (1) eine den auszuschneidenden Flächenbereich (2) begrenzende Schwächungszone (16) enthält, die auf einer der Seiten (33, 34) oder auf beiden Seite (33, 34) des Einspritz-Stanzteiles (1) ausgebildet ist.

13. Drosselklappeneinheit gemäß Anspruch 12, **dadurch gekennzeichnet, dass** das Einspritz-Stanzteil (1) bügelartige Ausstanzungen (11, 12, 15) enthält, welche die Klappenwelle (4) umschließen sowie eine mit einer Anzahl von Öffnungen (8) versehene Einspritzumrandung (7) umfasst.

14. Drosselklappeneinheit gemäß Anspruch 13, **dadurch gekennzeichnet, dass** die bügelartigen Ausstanzungen (11, 12, 15) im Befestigungsbereich (3) des Einspritz-Stanzteiles (1) an Ober- und Unterseite (33, 34) wechselweise ausgebildet sind.

15. Drosselklappeneinheit gemäß Anspruch 13, **dadurch gekennzeichnet, dass** die Klappenwelle (4) durchgängige Öffnungen (13) umfasst, die im Befestigungsbereich (3) neben den bügelartigen Ausstanzungen (11, 12) des Einspritz-Stanzteiles (1) liegen.

16. Drosselklappeneinheit gemäß Anspruch 13, **dadurch gekennzeichnet, dass** die durchgängigen Öffnungen (13) der Klappenwelle (4) im Befestigungsbereich (3) von bügelartigen Ausstanzungen (15) im Flächenbereich (2) des Einspritz-Stanzteiles (1) abgedeckt sind.

## Claims

1. Method for producing a butterfly valve unit for mounting in a flow duct (24) flowed through by a gas stream (40), with the following method steps:
a) a valve axle (4) is fixed within a fastening region (3) on an injection-moulded/punched part (1),
b) the injection-moulded/punched part (1), including a peripheral injection-moulded border (7), is injection-moulded into a housing (17),
c) the injection-moulding of the injection-moulded/punched part (1) is accompanied by an overmoulding of the valve axle (4) fixed on the injection-moulded/punched part (1) within the fastening region (3) and
d) a surface region (2) of the injection-moulded/punched part (1) that is connected to the valve axle (4) is cut out from the said part.

2. Method according to Claim 1, **characterized in that** the surface region (2) is cut out from the injection-moulded/punched part (1) by laser cutting.

3. Method according to Claim 1, **characterized in that** the cutting out of the surface region (2) takes place along a zone of weakening (16) of the injection-moulded/punched part (1).

4. Method according to Claim 1, **characterized in that**, when the injection-moulded/punched part (1) is injection-moulded in a housing material (17), openings (8) in the peripheral injection-moulded border (7) of the injection-moulded/punched part (1) are penetrated by the housing material (17, 31).

5. Method according to Claim 1, **characterized in that**, when the fastening region (3) is overmoulded, polymer material penetrates through openings (6, 13) in the surface region (2) of the injection-moulded/punched part (1) and the valve axle (4).

6. Method according to Claim 5, **characterized in that**, after the overmoulding of the fastening region (3) with polymer material (18), pressing of bearing bushes (19 and 20) onto the valve axle (4) takes place.

7. Method according to Claim 6, **characterized in that** the bearing bushes (19, 20) are pressed in in the region of cutouts (9, 10) in the claimed peripheral border (9).

8. Method according to Claim 5, **characterized in that**, when the fastening region (3) is overmoulded with polymer material (18), loop-like punched-out portions (11, 12, 15) in the surface region (2) of the injection-moulded/punched part (1) are enclosed.

9. Method according to Claims 4 and 5, **characterized in that**, when the fastening region (3) is overmoulded with polymer material (18), ribs (21) passing through openings (6) in the surface region (2) of the injection-moulded/punched part (1) are formed.

10. Method according to Claim 8, **characterized in that** loop-like punched-out portions (11, 12, 15) are formed onto the injection-moulded/punched part (1) in a spaced-apart, alternating sequence on the upper side (33) and underside (34) of the surface region (2).

11. Method according to Claim 8, **characterized in that** clearances permitting flowing of the polymer material (18) are provided in the fastening region (3), between the loop-like punched-out portions (11, 12, 15) of the injection-moulded/punched part (1).

12. Butterfly valve unit produced by the method according to Claim 1, **characterized in that** the injection-moulded/punched part (1) includes a zone of weakness (16) which delimits the surface region (2) to be cut out and is formed on one of the sides (33, 34) or on both sides (33, 34) of the injection-moulded/punched part (1).

13. Butterfly valve unit according to Claim 12, **characterized in that** the injection-moulded/punched part (1) includes loop-like punched-out portions (11, 12, 15), which enclose the valve axle (4), and also comprises a peripheral injection-moulded border (7) provided with a number of openings (8).

14. Butterfly valve unit according to Claim 13, **characterized in that** the loop-like punched-out portions (11, 12, 15) in the fastening region (3) of the injection-moulded/punched part (1) are alternately formed on the upper side (33) and underside (34).

15. Butterfly valve unit according to Claim 13, **characterized in that** the valve axle (4) comprises through-openings (13), which lie in the fastening region (3) alongside the loop-like punched-out portions (11, 12) of the injection-moulded/punched part (1).

16. Butterfly valve unit according to Claim 13, **characterized in that** the through-openings (13) of the valve axle (4) in the fastening region (3) are covered by loop-like punched-out portions (15) in the surface region (2) of the injection-moulded/punched part (1).

## Revendications

1. Procédé pour fabriquer une unité de clapet d'étranglement destinée à recevoir un canal d'écoulement (24) traversé par un courant de gaz (40), les étapes de procédé suivantes :
**caractérisé par**
a) un arbre de clapet (4) est fixé à une pièce découpée pour injection (1) à l'intérieur d'une zone de fixation (3), ,
b) la pièce découpée pour injection (1) qui comprend un bord d'injection (7) est injectée dans un boîtier (17),
c) l'arbre de clapet (4) fixé à la pièce découpée pour injection (1) est enrobé par injection à l'intérieur de la zone de fixation (3) avec l'injection de la pièce découpée pour injection (1) et
d) une zone de surface (2) - de la pièce découpée pour injection - liée à l'arbre de clapet (4) est découpée dans la pièce découpée pour injection (1).

2. Procédé selon la revendication 1,
**caractérisé en ce que**
la zone de surface (2) est découpée dans la pièce découpée pour injection (1) par découpage au laser.

3. Procédé selon la revendication 1,
**caractérisé en ce que**
la zone de surface (2) est découpée le long d'une zone d'affaiblissement (16) de la pièce découpée pour injection (1).

4. Procédé selon la revendication 1,
**caractérisé en ce que**
lors de l'injection de la pièce découpée pour injection (1) est injectée dans un matériau de boîtier (17), des ouvertures (8) dans le bord d'injection (7) de la pièce découpée pour injection (1) sont traversées par le matériau de boîtier (17, 31).

5. Procédé selon la revendication 1,
**caractérisé en ce que**
lorsque la zone de fixation (3) est enrobée de matière plastique, celle-ci traverse des ouvertures (6, 13) dans la zone de surface (2) de la pièce découpée pour injection (1) et de l'arbre de clapet (4).

6. Procédé selon la revendication 5,
**caractérisé en ce que**
après l'enrobage de la zone de fixation (3) par la matière plastique, des coussinets (19 ou 20) sont engagés par pression sur l'arbre de clapet (4).

7. Procédé selon la revendication 6,
**caractérisé en ce que**
les coussinets (19 ou 20) sont enfoncés dans la zone où le bord (9) sollicité a des creux (9, 10).

8. Procédé selon la revendication 5,
**caractérisé en ce que**
des découpes (11, 12, 15) en étrier situées dans la zone de surface (2) de la pièce découpée pour injection (1) sont incluses lorsque la zone de fixation (3) est enrobée de matière plastique (18).

9. Procédé selon les revendications 4 et 5,
**caractérisé en ce que**
des nervures (21) entrecoupées par des ouvertures (6) situées dans la zone de surface (2) de la pièce découpée pour injection (1) sont formées lorsque la zone de fixation (3) est enrobe de matière plastique (18).

10. Procédé selon la revendication 8,
**caractérisé en ce que**
dans la pièce découpée pour injection (1), les découpes (11, 12, 15) en étrier sont façonnées alternativement et à distance l'une de l'autre sur le côté supérieur et sur le côté inférieur (33, 34) de la zone de surface (2).

11. Procédé selon la revendication 8,
**caractérisé en ce qu'**
entre les découpes (11, 12, 15) en étrier de la pièce découpée pour injection (1), des espaces libres qui permettent à la matière plastique (18) de s'écouler sont prévus dans la zone de fixation (3).

12. Unité de clapets d'étranglement fabriquée selon le procédé selon la revendication 1,
**caractérisée en ce que**
la pièce découpée pour injection (1) comprend une zone d'affaiblissement (16) qui délimite la zone de surface (2) à découper et qui est façonnée sur un des côtés (33, 34) ou sur les deux côtés (33, 34) de la pièce découpée pour injection (1).

13. Unité selon la revendication 12,
**caractérisée en ce que**
la pièce découpée pour injection (1) contient des découpes (11, 12, 15) en étrier qui entourent l'arbre de clapet (4) et comprend un bord d'injection (7) muni d'un certain nombre d'ouvertures (8).

14. Unité selon la revendication 13,
**caractérisée en ce que**
les découpes (11, 12, 15) en étrier sont façonnées alternativement sur le côté supérieur et sur le côté inférieur (33, 34) dans la zone de fixation (3) de la pièce découpée pour injection (1).

15. Unité selon la revendication 13,
**caractérisée en ce que**
l'arbre de clapet (4) comprend des ouvertures (13) traversantes qui se trouvent dans la zone de fixation (3) à côté des découpes (11, 12) de la pièce découpée pour injection (1).

16. Unité selon la revendication 13,
**caractérisée en ce que**
dans la zone de fixation (3) les ouvertures (13) traversantes de l'arbre de clapet (4) sont recouvertes par des découpes (15) en étrier dans la zone de surface (2) de la pièce découpée pour injection (1).
